# DEMANDE DE BREVET EUROPEEN

(11) **EP 4 096 230 A1**
(43) Date de publication de la demande: **30.11.2022**
(21) Numéro de dépôt: 22171566.7
(22) Date de dépôt: 04.05.2022
(51) Int. Cl.: H04N 21/835, H04N 21/4627

(54) **PROCÉDÉ DE GESTION DE LA TRANSMISSION D'UN CONTENU PROTÉGÉ CONTRE LA COPIE À DESTINATION D'UN DISPOSITIF DE RESTITUTION**

(30) Priorité: 27.05.2021 FR 2105525
(71) Demandeur: Orange S.A., 92130 Issy-les-Moulineaux (FR)
(72) Inventeur: RIVOALEN, Mathieu, 92326 Châtillon (FR); MARCHAND, Hervé, 92326 Châtillon (FR)

(57) **Abrégé**

L'invention a trait à un procédé de gestion de la transmission d'un contenu multimédia protégé contre la copie, dit contenu protégé, depuis un terminal de lecture à destination d'un dispositif de restitution via un lien de communication en vue d'une restitution sur le dispositif de restitution, le terminal de lecture comprenant un premier module de protection (HDCP1), le procédé comprenant une étape de vérification de la présence sur le dispositif de restitution d'un deuxième module de protection (HDCP21) compatible avec le premier module de protection (HDCP1) ; dans la négative, une étape de transmission d'une demande de restitution, via le lien de communication, d'un contenu non protégé à la place du contenu protégé.

## Description

### Domaine technique

L'invention se rapporte à un procédé de gestion de la transmission d'un contenu protégé contre la copie à destination d'un dispositif de restitution.

L'invention vise les systèmes incluant un terminal de lecture de contenus apte à lire un contenu multimédia numérique et un dispositif de restitution apte à restituer le contenu multimédia.

Un terminal de lecture vise par exemple un décodeur de télévision numérique, une console de jeux, lecteurs Blu-ray ou équivalents, etc.

Un dispositif de restitution vise des terminaux capables de restituer un contenu audio et/ou vidéo. Un dispositif de restitution est par exemple un téléviseur, une barre de son, un amplificateur home-cinéma, un vidéoprojecteur, etc.

Le terminal de lecture et le dispositif de restitution communiquent via un lien de communication. Le lien de communication visé ci-dessus est quelconque. Ce lien peut être filaire ou non filaire. On verra dans la suite que, dans l'exemple de réalisation, le lien choisi pour illustrer l'invention est un lien filaire de type HDMI.

### Etat de la technique

Des systèmes de protection contre la copie de contenus numériques existent aujourd'hui. Parmi les solutions connues, un système de protection HDCP (sigle anglo-saxon de *High-bandwidth Digital Content Protection*) a été mis au point pour protéger contre la copie des contenus numériques transitant sur des liaisons de communication du type DVI (sigle anglo-saxon de *Digital visual interface*) ou HDMI (sigle anglo-saxon de *High Definition Multimedia Interface*)*.* Ces systèmes de protection visent à protéger des contenus numériques pour en interdire la copie numérique suite à la transmission du contenu vers un dispositif de restitution.

Un module de protection HDCP installé sur un équipement donné fonctionne en général en association avec un contrôleur, par exemple un contrôleur HDMI ou un contrôleur DVI, installé sur l'équipement. Il existe aussi plusieurs versions de protection HDCP (ou niveaux de protection).

Une transmission d'un contenu depuis un terminal de lecture vers un dispositif de restitution s'effectue seulement si les versions de modules de protection sont compatibles. Concrètement, lorsqu'un contenu doit être transmis par le terminal de lecture à destination d'un dispositif de restitution, le terminal de lecture, avant transmission du contenu à destination du dispositif de restitution, réalise une phase de vérification (appelée aussi phase de « négociation » par l'homme du métier) au cours de laquelle le terminal de lecture vérifie si un module de protection est présent sur le terminal destinataire ; dans l'affirmative, le terminal de lecture vérifie la version du module de protection installé sur le dispositif de restitution ; à réception de la version du module de protection, cette version est comparée avec la version du module installé sur le terminal de lecture.

Si les versions sont compatibles, le contenu est transmis par le terminal de lecture au dispositif de restitution pour y être restitué.

A l'inverse, si les versions ne sont pas compatibles, ou si le dispositif de restitution est dépourvu d'un module de protection, le contenu multimédia n'est pas transmis par le terminal de lecture au dispositif de restitution. Il résulte de cette incompatibilité ou de l'absence d'un module de protection un écran noir sur l'écran du dispositif de restitution ; ceci n'est pas acceptable en termes d'expérience utilisateur.

L'invention vient améliorer la situation.

### L'invention

A cet effet, l'invention concerne un procédé de gestion de la transmission d'un contenu multimédia protégé contre la copie, dit contenu protégé, depuis un terminal de lecture à destination d'un dispositif de restitution via un lien de communication en vue d'une restitution sur le dispositif de restitution, le terminal de lecture comprenant un premier module de protection, le procédé comprenant une étape de vérification de la présence sur le dispositif de restitution d'un deuxième module de protection compatible avec le premier module de protection ; dans la négative, une étape de transmission d'une demande de restitution, via le lien de communication, d'un contenu non protégé à la place du contenu protégé.

La solution assure une restitution d'un contenu autre que le contenu demandé lorsque le dispositif de restitution est dépourvu d'un module de protection ou, dans le cas où le dispositif de restitution est équipé d'un module de protection, les modules de protection sont incompatibles entre eux et qu'une transmission du contenu protégé n'est pas possible.

L'invention évite, pour un utilisateur prêt à visualiser ou à écouter le contenu, une phase d'attente inutile n'aboutissant sur aucune restitution de contenu. Un contenu est restitué dans tous les cas.

Selon un premier mode de réalisation, l'étape de vérification est précédée d'une étape de réception du contenu protégé et du contenu non protégé depuis un réseau de communication. Ce premier mode est avantageux car le contenu non protégé peut être transmis par l'émetteur du contenu protégé. L'émetteur peut par exemple associer à chaque contenu protégé un contenu non protégé choisi judicieusement. Par exemple, si le contenu protégé est un film, le contenu non protégé est par exemple les premières minutes du film ou un extrait du film. Ce premier mode décharge le terminal de lecture du choix du contenu non protégé à restituer.

Selon une variante de ce premier mode, l'étape de réception est précédée d'une étape de transmission d'une demande d'accès au contenu protégé, et en ce que la demande inclut en outre une demande de réception d'un contenu non protégé. Cette variante est intéressante par exemple lorsque le terminal de lecture ne dispose pas de contenu non protégé à proposer à la place du contenu protégé. Cette variante évite aussi à l'émetteur du contenu protégé de transmettre un contenu non protégé à chaque transmission d'un contenu protégé.

Selon un deuxième mode de mise en œuvre particulier de l'invention, qui pourra être mis en œuvre alternativement ou cumulativement avec le précédent, le contenu non protégé est issu d'une mémoire incluse dans le dispositif de restitution. Ce deuxième mode ne nécessite aucune modification au niveau de l'émetteur fournisseur de contenus ; ce deuxième mode décharge le fournisseur de contenus de l'émission du contenu non protégé. Dans ce deuxième mode, le terminal de lecture est responsable du stockage du contenu non protégé et du type de contenu non protégé à restituer.

Selon un troisième mode de réalisation de l'invention, qui pourra être mis en œuvre alternativement ou cumulativement avec les précédents, l'étape de transmission est précédée d'une étape de recherche d'un autre dispositif de restitution équipé d'un troisième module de protection compatible avec le premier module de protection ; si un troisième module de protection compatible est trouvé, le contenu non protégé transmis lors de l'étape de transmission inclut une donnée représentative du résultat de la recherche. Ce troisième mode est intéressant en particulier lorsqu'il est combiné au premier mode car si les premières minutes du film sont restituées, le reste du film peut se poursuivre sur cet autre dispositif de restitution. Ce mode assure une quasi continuité de la restitution en basculant la restitution du contenu du premier dispositif de restitution vers le second dispositif de restitution.

Suite à la restitution de la possibilité d'utiliser un autre dispositif de restitution, un utilisateur peut paramétrer le terminal de lecture de manière à modifier le dispositif de restitution choisi par défaut en le remplaçant par le dispositif de restitution TV trouvé dont le module de protection est compatible.

Selon une variante du troisième mode de réalisation, suite à l'étape de transmission, une réception d'une donnée représentative d'une validation déclenche une étape de demande restitution du contenu protégé sur ledit autre dispositif de restitution. Cette variante requiert une validation de la part d'un utilisateur par exemple au moyen d'un dispositif de commande. Lorsque le terminal de lecture reçoit une donnée représentative de la validation, issue de la télécommande, le terminal de lecture sélectionne le dispositif de restitution trouvé et requiert une restitution du contenu protégé sur ce dispositif de restitution dispositif de restitution TV trouvé.

Selon un aspect matériel, l'invention se rapporte à une entité de gestion de la transmission d'un contenu multimédia protégé depuis un terminal de lecture vers un dispositif de restitution via un lien de communication, le terminal de lecture étant apte à recevoir des contenus protégés en vue d'une restitution sur le dispositif de restitution, le terminal de lecture comprenant un premier module de protection, l'entité comprenant
a. un module de vérification de la présence sur le dispositif de restitution d'un deuxième module de protection compatible avec le premier module de protection;
b. un module de transmission apte à transmettre, en fonction du résultat obtenu par le module de recherche, une demande de restitution, via le lien de communication, d'un contenu non protégé à la place du contenu protégé.

Selon un autre aspect matériel, l'invention a trait à un programme d'ordinateur apte à être mis en œuvre dans une entité de gestion tel que définie ci-dessus, ledit programme comprenant des instructions de code qui, lorsque le programme est exécuté réalise les étapes définies dans le procédé défini ci-dessus.

Selon un autre aspect matériel, l'invention a trait à un support d'enregistrement lisible par un processeur de données sur lequel est enregistré un programme comprenant des instructions de code de programme pour l'exécution des étapes du procédé défini ci-dessus.

Selon un autre aspect fonctionnel, l'invention a trait à un procédé de gestion de la transmission d'un contenu multimédia protégé contre la copie (PC), dit contenu protégé, caractérisé en ce qu'il comprend
une étape de réception d'une demande d'accès à un contenu multimédia protégé contre la copie ;
une étape de transmission du contenu demandé et d'un contenu non protégé contre la copie.

Selon un autre aspect matériel, l'invention se rapporte à une entité de gestion, dite deuxième entité, de la transmission d'un contenu multimédia protégé contre la copie, dit contenu protégé, caractérisé en ce qu'il comprend
un module de réception d'une demande d'accès à un contenu multimédia protégé contre la copie ;
un module de transmission du contenu demandé et d'un contenu non protégé contre la copie.

Selon un autre aspect matériel, l'invention se rapporte à un serveur caractérisé en ce qu'il comprend une deuxième entité de gestion telle que définie ci-dessus.

Selon un autre aspect matériel, l'invention a trait à un programme d'ordinateur apte à être mis en œuvre dans une entité de gestion tel que définie ci-dessus, ledit programme comprenant des instructions de code qui, lorsque le programme est exécuté réalise l'étape définie dans le procédé défini en liaison avec ledit autre aspect fonctionnel.

Selon un autre aspect matériel, l'invention a trait à un support d'enregistrement lisible par un processeur de données sur lequel est enregistré un programme comprenant des instructions de code de programme pour l'exécution des étapes du procédé défini en liaison avec ledit autre aspect fonctionnel.

Précisions ici que le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question. L'invention sera mieux comprise à la lecture de la description qui suit, donnée à titre d'exemple et faite en référence aux dessins annexés sur lesquels :
[Fig. 1] représente un système informatique sur lequel est illustré un exemple de réalisation de l'invention dans lequel le premier terminal est un codeur de télévision numérique et le deuxième terminal est un dispositif de restitution.
[Fig. 2] est une vue schématique des circuits présents dans le premier terminal de lecture.
[Fig. 3] est une vue schématique des circuits présents dans le dispositif de restitution.
[Fig. 4] est une vue schématique des échanges de messages selon un premier mode de réalisation basé sur le fait que le serveur transmet à la fois un contenu protégé et un contenu non protégé apte à remplacer le contenu protégé lorsqu'une incompatibilité est détectée entre modules de protection présents sur le terminal de lecture et le dispositif de restitution respectivement.
[Fig. 5] est une vue schématique des échanges de messages selon un deuxième mode de réalisation basé sur le fait que le contenu non protégé est stocké dans une mémoire du terminal de lecture.
[Fig. 6] est une vue schématique des échanges de messages selon un troisième mode de réalisation dans lequel le système comprend plusieurs dispositifs de restitution aptes à restituer un contenu.

### Description détaillée d'un exemple de réalisation illustrant l'invention :

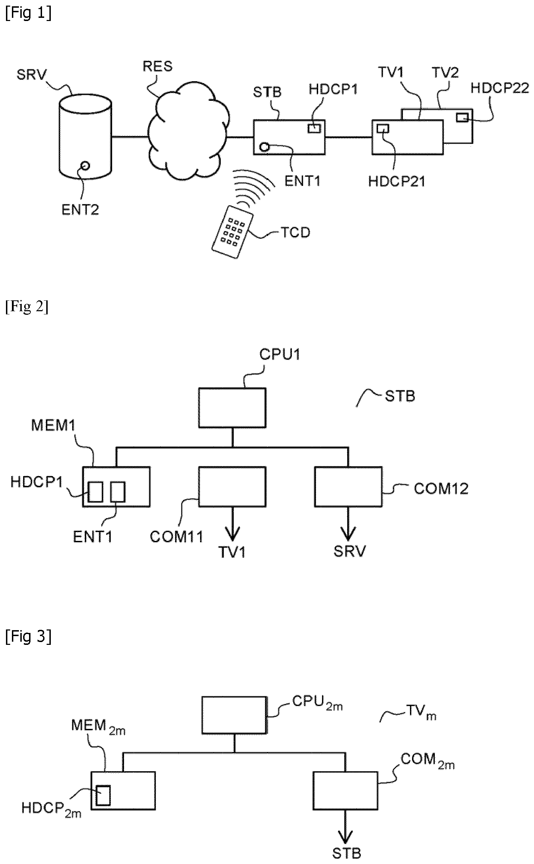

La figure 1 représente un système SYS comprenant un premier terminal STB et un ou plusieurs dispositifs de restitution TVm (« m » est un entier). Dans notre exemple, le système SYS comprend un premier dispositif de restitution TV1 et un deuxième dispositif de restitution TV2. Dans notre exemple, le premier terminal est un décodeur STB et les dispositifs de restitution sont par exemple des téléviseurs.

Dans notre exemple, le terminal de lecture STB est relié via une liaison de communication LI au premier dispositif de restitution TV1 pour y restituer un contenu numérique par exemple un film. Dans notre exemple, un dispositif de restitution est un téléviseur, mais pourrait très bien être un simple écran, une enceinte, etc. Une liaison de communication sans fil, par exemple une liaison Wi-Fi, aurait pu être utilisée à la place de la liaison filaire.

Le décodeur STB est apte à communiquer avec un serveur fournisseur de contenus SRV via un réseau de communication RES par exemple le réseau Internet. Le serveur SRV stocke des contenus de toute sorte et en particulier des contenus protégés contre la copie. L'accès à ces contenus requiert la présence de modules de protection sur les différents terminaux de la chaîne de transmission empêchant de ce fait que le contenu soit copié par un tiers non autorisé. Ces modules de protection chiffrent en général le contenu au moyen de technique de chiffrement cryptographique utilisant des clés de cryptographie. Nous ne rentrerons pas ici dans les détails du chiffrement car sans intérêt pour l'exposé de l'invention.

Dans notre exemple, un dispositif de commande par exemple une télécommande TCD est apte à commander le décodeur STB.

En référence à la figure 2, le terminal de lecture STB inclut classiquement un processeur CPU1. Le terminal inclut en outre un module de stockage MEM1 notamment pour le stockage d'une entité de gestion ENT1 dont la fonction sera décrite ci-dessous.

Le terminal de lecture STB comprend en outre un module de communication COM11 pour communiquer avec un dispositif de restitution TVm. Dans notre exemple, le module de communication COM11 est un module de communication HDMI. Le terminal de lecture STB comprend en outre un module de communication COM12 pour communiquer avec le serveur SRV.

Le décodeur STB stocke aussi un module de protection HDCP1 assurant une protection des contenus protégés contre la copie.

La figure 3 est une vue schématique d'une partie des composants électroniques d'un dispositif de restitution TVm (« m » est un nombre entier désignant le dispositif de restitution TVm, dans notre exemple m= 2).

Un dispositif de restitution TVm comprend un processeur CPU2, une mémoire MEMm et un module de communication COMm1 permettant une communication avec le décodeur STB via le lien LI.

Le dispositif de restitution TVm stocke aussi un module de protection HDCPm2 assurant une protection des contenus protégés contre la copie.

Comme évoqué précédemment, il existe plusieurs niveaux de protection HDCP. Chaque module de protection offre un niveau de protection donné.

En pratique, lorsqu'un terminal de lecture est connecté, par exemple via une liaison HDMI, à un dispositif de restitution, des informations sont échangées entre les deux terminaux, notamment leur niveau de protection HDCP. Le terminal de lecture réalise une phase de négociation au cours de laquelle il interroge le dispositif de restitution auquel il est connecté pour connaître son niveau de protection HDCP et vérifier si les modules de protection respectifs HDCP1 et HDCP2m sont compatibles. Cette compatibilité est une nécessaire pour que le décodeur STB puisse transmettre des contenus protégés à destination du dispositif de restitution dispositif de restitution TV. Si les modules de protection ne sont pas compatibles on dit que l'étape de négociation a échoué.

Par exemple, la protection anticopie des contenus de résolution UHD 4K fait appel à une version HDCP 2.2. Dans cette configuration, si le dispositif de restitution TV n'offre pas le niveau de protection HDCP 2.2 requis par le terminal de lecture décodeur STB, on conclut que les modules de protection ne sont pas compatibles. Du fait de cette incompatibilité, le contenu protégé n'est pas transmis par le terminal de lecture au dispositif de restitution.

Par conséquent, pour restituer un contenu vidéo par exemple un contenu UHD 4K issu d'un terminal de lecture sur un téléviseur 4K, il faut non seulement que le terminal de lecture et le dispositif de restitution soient tout deux équipés de modules de protection respectifs, dans notre exemple des contrôleurs HDMI compatibles HDCP 2.2, mais aussi que cette norme anti-copie HDCP 2.2 soit prise en charge par le terminal de lecture et le dispositif de restitution, sans quoi c'est l'écran reste noir.

La solution comprend, lorsque le dispositif de restitution TV est dépourvu de module de protection, ou lorsqu'il y a une incompatibilité entre modules de protection, une étape de déclenchement d'une lecture par le décodeur STB d'un contenu non protégé contre la copie, et une étape de transmission du contenu non protégé contre la copie au dispositif de restitution dispositif de restitution TV à la place du contenu protégé. Le contenu non protégé est bien évidemment différent du contenu protégé et ne nécessite pas, du fait qu'il est non protégé contre la copie, de protection particulière et donc de modules de protection sur les différents terminaux.

En d'autres mots, lorsque les modules de protection présents sur le décodeur STB et sur le dispositif de restitution TV ne sont pas compatibles, et que donc l'étape de négociation échoue, un contenu non protégé NPC est transmis à la place du contenu protégé PC depuis le décodeur STB à destination du dispositif de restitution TV.

Le décodeur STB et le serveur SRV sont équipés d'entités de gestion respectives ENT1 et ENT2. Dans notre exemple, ces entités sont stockées dans des mémoires du serveur SRV et du décodeur STB, respectivement. Dans les modes de réalisation décrits ci-dessous, les étapes réalisées par le décodeur STB ou le serveur sous-entend que les étapes sont réalisées par les entités ENT1 et ENT2, respectivement.

Différents modes de réalisation vont maintenant être illustrés. Ces modes comprennent des étapes référencées ETxy, « x » désignant le mode de réalisation considéré, et « y » désignant l'étape concernée du mode considéré.

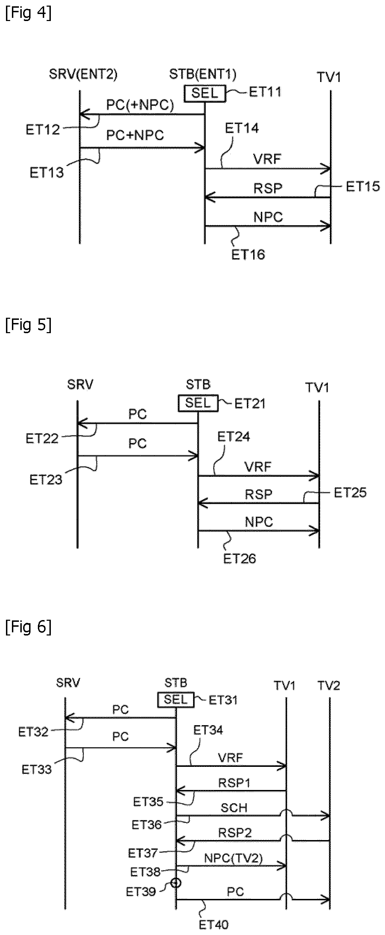

Un premier mode de réalisation du procédé de l'invention est illustré en référence à la figure 4. Dans ce mode, le serveur de contenus SRV transmet à la fois un contenu protégé PC et un contenu non protégé NPC.

Ce premier mode fait intervenir le dispositif de restitution TV1.

Ce premier mode comprend les étapes suivantes ET11 à ET16.

Lors d'une première étape ET11, un utilisateur sélectionne SEL un contenu. Cette étape n'est pas essentielle, en effet, le contenu peut aussi être transmis spontanément par le serveur de contenus sans sélection préalable de l'utilisateur.

Lors d'une deuxième étape ET12, le décodeur STB requiert auprès du serveur SRV la réception d'un contenu sélectionné PC.

Lors d'une troisième étape ET13, le serveur SRV transmet le contenu demandé. Le contenu PC est protégé contre la copie ; sa transmission et sa restitution nécessite une présence sur le décodeur STB et sur le dispositif de restitution TV1 de modules de protection HDCP1 et HDCP2 compatibles.

Dans ce mode, le serveur transmet aussi un non contenu protégé NPC. Cette transmission peut être faite avant le contenu protégé ou parallèlement à la transmission du contenu protégé. Cette transmission du contenu non protégé NPC s'effectue par anticipation en cas de non compatibilité entre modules de protection. S'il y a avait effectivement incompatibilité, le contenu non protégé NPC étant stocké dans une mémoire du décodeur STB pourra être transmis sans délai à destination du dispositif de restitution TV1.

A réception du contenu protégé PC, lors d'une quatrième étape ET14, le décodeur STB vérifie VRF la présence d'un module de protection HCP2 compatible sur le dispositif de restitution TV1.

Lors d'une cinquième étape ET15, le décodeur STB reçoit une réponse RSP du dispositif de restitution TV1.

En fonction du résultat de l'étape de vérification, lors d'une sixième étape ET16, le décodeur STB transmet ou pas le contenu protégé PC.

Si les modules sont compatibles (cas non représenté sur la figure 4), le contenu protégé PC est chiffré par le module de protection HDPC1 et transmis depuis le décodeur STB à destination du dispositif de restitution TV1 en vue d'une restitution.

Nous ne rentrerons pas davantage dans les détails de fonctionnement des modules de protection car sans intérêt pour l'exposé de l'invention.

Si les modules de protection ne sont pas compatibles, par exemple parce que les versions des modules de protection HDCP1 et HDCP21 diffèrent, le décodeur STB requiert lors de la sixième étape ET16 la restitution du contenu non protégé NPC reçu du serveur.

Suite à la transmission du contenu non protégé NPC, ce dernier est restitué sur le dispositif de restitution dispositif de restitution TV1.

Le contenu non protégé NPC contient par exemple une information sur le résultat de l'étape de vérification. Le message est par exemple « la restitution n'est pas possible de fait d'une incompatibilité entre votre décodeur et votre téléviseur ».

Selon une variante du premier mode décrit ci-dessus, lors de la deuxième étape, le décodeur STB requiert explicitement auprès du serveur SRV la réception du contenu non protégé NPC associé au contenu protégé. Sur la figure 1, lors de la première étape, la référence NPC est mise entre parenthèse pour illustrer cette possibilité.

Selon une autre variante du premier mode, le contenu non protégé NPC est demandé que si les modules de protection ne sont pas compatibles suite à la quatrième étape ET4.

Selon un autre mode de réalisation, qui pourra être mis en œuvre alternativement ou cumulativement avec le précédent mode, au lieu d'être transmis par le serveur, le contenu protégé NPC est stocké préalablement dans la mémoire du décodeur STB sans que cela nécessite une transmission d'un contenu non protégé NPC par le serveur SRV.

Dans cette configuration, les étapes référencées ET21 à ET26 sont les mêmes que celles décrites en référence à la figure 4 à la différence de l'étape ET22 ; lors de cette étape ET22, le serveur SRV ne transmet pas de contenu non protégé (NPC) au décodeur STB.

Selon un troisième mode, on considère que le système SYS comprend plusieurs dispositifs de restitution par exemple deux dispositifs de restitution à savoir un premier dispositif de restitution TV1 et un deuxième dispositif de restitution TV2. Dans ce troisième mode, on verra que le décodeur STB est capable d'identifier un dispositif de restitution TV2, distinct du premier dispositif TV1, et compatible dans le réseau local.

On considère que les deux dispositifs de restitution TV1 et TV2 sont équipés de modules de protection HDCP21 et HDCP22, respectivement, et que seule la version du module de protection HDCP22 du dispositif de restitution TV2 est compatible avec le module de protection HDCP1 du décodeur STB.

On considère aussi que seul le dispositif de restitution TV1 est appairé au décodeur STB. EN d'autres mots, à un instant t une demande de restitution d'un contenu issu du décodeur STB est automatiquement transmise au premier dispositif de restitution TV1.

Les étapes ET31 à ET34 sont les mêmes que les étapes ET11 à ET14, ou que les étapes ET21 à ET24, au choix selon que l'on souhaite que le serveur transmette le contenu non protégé NPC ou pas.

Dans ce troisième mode, Lors la cinquième étape ET35, l'entité de gestion ENT1 compare les modules de protection et conclut que les modules de protection HDCP1 et HDCP21 ne sont pas compatibles, par exemple parce que les versions des modules diffèrent.

Lors d'une sixième étape ET36, le décodeur STB, sous-entendu l'entité de gestion ENT1, recherche SCH un dispositif de restitution TVm dont le module de protection HDCP2m est compatible avec le module de protection du décodeur STB.

Comme vu ci-dessus, le module de protection HDCP22 (m=2) est compatible avec le module de protection HDCP1.

Lors d'une septième étape ET37, le décodeur STB reçoit une réponse du dispositif de restitution TV2, et compare à ce moment-là les versions des modules de protection HDCP1 et HDCP22. L'entité ENT1 constate la compatibilité entre les deux modules de protection.

Ensuite, lors d'une huitième étape ET38, le décodeur STB requiert la restitution du contenu non protégé NPC(TV2), le contenu non protégé incluant une indication relative au fait qu'un autre dispositif de restitution que celui défini par défaut, en l'occurrence le deuxième dispositif de restitution TV2, est apte à restituer le contenu protégé CP. L'interface comprend par exemple une zone à sélectionner de manière à valider une restitution sur le dispositif de restitution TV2 à la place du dispositif de restitution TV1 défini par défaut.

On suppose qu'un utilisateur valide, lors d'une neuvième étape ET39, l'utilisation du dispositif de restitution TV2 à la place du premier dispositif de restitution TV1 pour la restitution du contenu protégé PC. La validation une donnée représentative d'une validation et déclenche une étape de demande restitution du contenu protégé sur ledit autre dispositif de restitution. La donnée représentative d'une validation est par exemple un code binaire issu de la télécommande et interprétable par le processeur du terminal de lecture décodeur STB.

Suite à la réception de la donnée représentative de la validation, lors d'une dixième étape ET40, le décodeur STB requiert une restitution du contenu protégé CP sur le deuxième dispositif de restitution TV2. Dans notre exemple, la restitution est précédée d'un appairage entre le décodeur STB et le deuxième dispositif de restitution TV2 si un appairage est nécessaire en particulier lorsque la connexion est une connexion sans fil du type Wi-Fi. Cet appairage n'est pas nécessaire par exemple lorsque le terminal de lecture est relié au deuxième dispositif de restitution TV2 via une connexion filaire (câble HDMI ou équivalents)

Dans les différents modes de réalisation décrits ci-dessus, le contenu non protégé est par exemple les premières minutes du film ou un extrait du film.

Dans le troisième mode de réalisation, la durée du contenu non protégé peut être choisie suffisamment longue pour assurer une continuité entre la restitution du contenu non protégé sur le dispositif de restitution TV1 et le dispositif de restitution TV2. De cette manière, si le contenu non protégé correspond aux premières minutes d'un film, la possibilité de basculer vers un deuxième dispositif de restitution TV2 assurer une restitution quasi continue du contenu protégé.

Signalons enfin ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de la transmission d'un contenu multimédia protégé contre la copie (PC), dit contenu protégé, depuis un terminal de lecture à destination d'un dispositif de restitution via un lien de communication en vue d'une restitution sur le dispositif de restitution, le terminal de lecture comprenant un premier module de protection (HDCP1), le procédé comprenant une étape de vérification (ET14) de la présence sur le dispositif de restitution d'un deuxième module de protection (HDCP21) compatible avec le premier module de protection (HDCP1) ; dans la négative, une étape de transmission (ET16 ; ET26 ; ET38) d'une demande de restitution, via le lien de communication, d'un contenu non protégé (NPC) à la place du contenu protégé (PC).

2. Procédé de gestion selon la revendication 1, **caractérisé en ce que** l'étape de vérification est précédée d'une étape de réception (ET13) du contenu protégé (PC) et du contenu non protégé (NPC) depuis un réseau de communication.

3. Procédé de gestion selon a revendication 2, **caractérisé en ce que** l'étape de réception est précédée d'une étape de transmission d'une demande d'accès au contenu protégé (PC), et **en ce que** la demande inclut en outre une demande de réception d'un contenu non protégé (NPC).

4. Procédé de gestion selon la revendication 1, **caractérisé en ce que** le contenu non protégé (NPC) est issu d'une mémoire incluse dans le dispositif de restitution.

5. Procédé de gestion selon la revendication 1, **caractérisé en ce que** l'étape de transmission (ET38) est précédée d'une étape de recherche (ET36) d'un autre dispositif de restitution (TV2) équipé d'un troisième module de protection compatible (HDCP22) avec le premier module de protection, et **en ce que** si un troisième module de protection compatible est trouvé, le contenu non protégé transmis lors de l'étape de transmission (ET38) inclut une donnée représentative du résultat de la recherche.

6. Procédé selon la revendication 5, **caractérisé en ce qu'**il comprend, suite à l'étape de transmission (ET38), une réception d'une donnée représentative d'une validation déclenche une étape de demande restitution du contenu protégé sur ledit autre dispositif de restitution (TV2)

7. Entité de gestion (ENT1) de la transmission d'un contenu multimédia protégé (PC) depuis un terminal de lecture vers un dispositif de restitution via un lien de communication, le terminal de lecture étant apte à recevoir des contenus protégés en vue d'une restitution sur le dispositif de restitution, le terminal de lecture comprenant un premier module de protection (HDCP1), l'entité comprenant
a. un module de vérification de la présence sur le dispositif de restitution d'un deuxième module de protection (HDCP2) compatible avec le premier module de protection (HDCP1) ;
b. un module de transmission apte à transmettre, en fonction du résultat obtenu par le module de recherche, une demande de restitution, via le lien de communication, d'un contenu non protégé (NPC) à la place du contenu protégé (PC).

8. Terminal (STB) **caractérisé en ce qu'**il comprend une entité de gestion (ENT1) telle que définie dans la revendication 7.

9. Programme d'ordinateur apte à être mis en œuvre dans une entité de gestion tel que définie dans la revendication 7, ledit programme comprenant des instructions de code qui, lorsque le programme est exécuté réalise l'étape définie dans la revendication 1.

10. Support d'enregistrement lisible par un processeur de données sur lequel est enregistré un programme comprenant des instructions de code de programme pour l'exécution des étapes du procédé défini dans l'une des revendications 1 à 6.

11. Procédé de gestion de la transmission d'un contenu multimédia protégé contre la copie (PC), dit contenu protégé, **caractérisé en ce qu'**il comprend
a. une étape de réception d'une demande d'accès à un contenu multimédia protégé contre la copie ;
b. une étape de transmission du contenu demandé et d'un contenu non protégé contre la copie.

12. Entité de gestion (ENT2) de la transmission d'un contenu multimédia protégé contre la copie (PC), dit contenu protégé, **caractérisé en ce qu'**il comprend
a. un module de réception d'une demande d'accès à un contenu multimédia protégé contre la copie ;
b. un module de transmission du contenu demandé et d'un contenu non protégé contre la copie.

13. Serveur (SRV) **caractérisé en ce qu'**il comprend une entité de gestion (ENT2) telle que définie dans la revendication 12.

14. Programme d'ordinateur apte à être mis en œuvre dans une entité de gestion (ENT2) tel que définie dans la revendication 12, ledit programme comprenant des instructions de code qui, lorsque le programme est exécuté réalise les étapes définies dans la revendication 11.

15. Support d'enregistrement lisible par un processeur de données sur lequel est enregistré un programme comprenant des instructions de code de programme pour l'exécution du procédé défini dans la revendication 11.
